(19) **Europäisches Patentamt European Patent Office Office européen des brevets**

(11) **EP 2 731 378 B1**

(12) **EUROPEAN PATENT SPECIFICATION**

(45) Date of publication and mention of the grant of the patent:
**05.04.2017 Bulletin 2017/14**

(51) Int Cl.:
**H04W 36/00** *(2009.01)* **H04W 84/04** *(2009.01)*

(21) Application number: **12360077.7**

(22) Date of filing: **08.11.2012**

(54) **Neighbouring cell list creation in a heterogenous network**

Erzeugung einer Nachbarzellenliste in einem heterogenen Netzwerk

Création d'une liste des cellules voisines dans une réseau hétérogène

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **ALCATEL LUCENT**
**92100 Boulogne-Billancourt (FR)**

(72) Inventors:
• **Razavi, Rouzbeh**
**Blanchardstown**
**Dublin 15 (IE)**
• **Claussen, Holger**
**Blanchardstown**
**Dublin 15 (IE)**

(74) Representative: **Sarup, David Alexander et al**
**Alcatel-Lucent Telecom Ltd**
**Intellectual Property Business Group**
**Christchurch Way**
**Greenwich**
**London SE10 0AG (GB)**

(56) References cited:
**WO-A1-2011/022731    US-A1- 2011 237 252**

• **ALESSANDRO CHECCO ET AL:**
**"Self-configuration of scrambling codes for WCDMA small cell networks", PERSONAL INDOOR AND MOBILE RADIO COMMUNICATIONS (PIMRC), 2012 IEEE 23RD INTERNATIONAL SYMPOSIUM ON, IEEE, 9 September 2012 (2012-09-09), pages 149-154, XP032272777, DOI: 10.1109/PIMRC.2012.6362585 ISBN: 978-1-4673-2566-0**

**Description**

FIELD OF THE INTENTION

The present invention relates to a serving base station method, a base station and a computer program product.

BACKGROUND

In a cellular wireless telecommunications system, radio coverage is provided by areas known as cells. A base station is located in each cell to provide the radio coverage area. Traditional base stations provide coverage in relatively large geographical areas and these cells are often referred to as macro cells. It is possible to provide smaller-sized cells, often within a macro cell. Such smaller-sized cells are sometimes referred to as micro cells, pico cells or femto cells. Small cells are typically established by providing a small cell base station that provides radio coverage having a relatively limited range within the radio coverage area of a macro cell. The transmission power of the small cell base station is relatively low and, hence, each small cell provides a smaller coverage area compared with that of a macro cell and covers, for example, an office or a home. A group of such small cell base stations may together provide a wireless small cell network.

Such small cells are typically provided where the communications coverage provided by the macro cell is poor, or where a user wishes to use an alternative communications link provided locally by the small cell base station to communicate with the core network. Such a situation may arise where, for example, a user has a pre-existing communications link and the user wishes to utilise that link in preference to that provided by the macro network to communicate with the core network. The group of small cell base stations providing the wireless small cell network can together provide extended local coverage to user equipment throughout, for example, a home or an office building by using multiple small cell base stations distributed throughout those buildings which enables each of those base stations to transmit a lower power than would otherwise be necessary if coverage was provided by a single small cell base station.

However, the proliferation of the deployment of base stations and, in particular, small cell base stations increases the complexity of handover of user equipment between base stations. Accordingly, it is desired to provide an improved technique for controlling handover.

US2011/0237252 discloses a way of managing a neighbour list of neighbouring base stations with femtocell deployments. The method involves determining the current location of the terminal. The femtocells local to that location are then included in the list as well as the neighbouring macrocells (see paragraph 31 for example). Other more remote femtocells are excluded from the list.

WO 2011/022731 discloses a way of restricting a neighbour cell list to a maximum size. A list of candidate neighbour cells is generated and a subset are selected for the final list in dependence upon particular characteristics such as whether or not a cell allows access to the user equipment UE, or whether or not the UE is travelling quickly or proximity.

SUMMARY

According to a first aspect, there is provided a serving base station method, comprising:

establishing a first set of cell identifiers reserved for use by neighbouring small cell base stations; establishing a second set of cell identifiers used by neighbouring base stations of said serving base station; determining those of said neighbouring base stations most likely to be used for handover by a user equipment being served by said serving base station; and transmitting a user-specific neighbour list to said user equipment, said user-specific neighbour list having an indication of cell identifiers used by neighbouring base stations, said user-specific neighbour list including all of said first set of cell identifiers and fewer than said second set of cell identifiers, said fewer than said second set of cell identifiers including at least a cell identifier from said second set of cell identifiers associated with that neighbouring base station determined to be most likely used for handover by said user equipment; wherein said small cell base stations are configured to provide radio coverage having a limited range that provides a smaller coverage than the radio coverage of the serving and neighbouring base stations.

The first aspect recognises that a problem with the deployment of small cells within a network is that their deployment is unplanned. Also, the coverage area of such small cells is small. The small size and unplanned deployment means that in order to maximise the likelihood of a small cell being identified as a potential handover target, it is normal to include the cell identifiers which are reserved for use by those small cells within the neighbour cell list provided by cells which is then utilised by user equipment to assist in handover. However, the neighbour cell list will also need to include any other neighbouring cells which neighbour the cell to which the user equipment is currently attached. The first aspect also recognises that if the neighbour cell list includes all of these potential neighbours, then the time interval which elapses whilst the user equipment performs measurements to assess the quality of all of those potential neighbours may become too long and potential handover opportunities may be missed, which may result in dropped calls.

Accordingly, a base station method may be provided. The method may comprise a step of establishing or identifying a first set of cell identifiers which are reserved for use by neighbouring small cell base stations. The method may also comprise the step of establishing or identifying a second set of cell identifiers which are used by base stations which are neighbours. The method may also comprise determining a subset of the neighbouring base stations which are most likely to be used for handover by user equipment being served by the base station. The method may also comprise the step of transmitting a neighbour list which is specific to the user equipment. The neighbour list may include an indication of those cell identifiers are being utilised by neighbouring base stations. The neighbour list may include the first set of cell identifiers which are reserved for use by the small cell base stations. The neighbour list may also include fewer than the second set of cell identifiers used by neighbouring base stations.

Accordingly, in order to reduce the probability of handovers being missed and calls being dropped, the size of the neighbour list may be reduced. In particular, a reduced size neighbour list may be transmitted to the user equipment which reduces the time taken for the quality of those cells in the reduced size neighbour list to be measured. This provides a predictable measurement period which can be set, for example, to no more than a predetermined amount of time (which may be determined in knowledge of different network characteristics). This helps to ensure that the probability of a handover candidate being missed and a call being dropped is reduced.

The user-specific neighbour list includes a cell identifier from the second set of cell identifiers associated with that neighbouring base station determined to be most likely used for handover by the user equipment. Accordingly, that base station which is identified as having a highest probability for handover is included in the list. Again, this helps to ensure that the reduced size list includes at least that base station which is most likely to be handed over to.

In one embodiment, the user-specific neighbour list includes a plurality of cell identifiers from the second set of cell identifiers associated with those neighbouring base stations determined to be most likely used for handover by the user equipment. Accordingly, those base stations which are identified as having a higher probability for handover may be included in the list. Again, this helps to ensure that the reduced size list includes at least those base stations which are most likely to be handed over to.

In one embodiment, the user-specific neighbour list excludes a cell identifier from the second set of cell identifiers associated with that neighbouring base station determined to be most least likely used for handover by the user equipment. Excluding the cell identifier with the lowest probability of handover from the list helps to decrease the probability of utilising time and resources measuring characteristics of a base station that is unlikely to be used for a handover and frees time and resources for measuring characteristics of a base station that is likely to be used for a handover.

In one embodiment, the user-specific neighbour list excludes a plurality of cell identifiers from the second set of cell identifiers associated with those neighbouring base stations determined to be least likely used for handover by the user equipment. Excluding the cell identifiers with the lowest probability of handover from the list helps to decrease the probability of utilising time and resources measuring characteristics of a base station that is unlikely to be used for a handover and frees time and resources for measuring characteristics of a base station that is likely to be used for a handover.

In one embodiment, the method comprises the step of determining a maximum number of cell identifiers to be included in the user-specific neighbour list and wherein the user-specific neighbour list includes all of the first set of cell identifiers and those of the second set of cell identifiers which together fail to exceed the maximum number. Hence, a limit on the size of the user-specific neighbour list can be set based on characteristics of the network and/or the user equipment and the list can be filled first using the first set of cell identifiers and any remaining empty entries in the list can be filled using the second set of cell identifiers.

In one embodiment, the maximum number is determined based on an expected mobility characteristic of the user equipment and coverage characteristics of the base stations. It will be appreciated that if the mobility of the user equipment is low, then the maximum number may be higher than if the mobility is high. Likewise, it will be appreciated that if the coverage area of the base stations is high, then the maximum number may be higher than if the coverage is low.

In one embodiment, the method comprises the step of adjusting the maximum number in response to changes in at least one of the expected mobility characteristic of the user equipment and the coverage characteristics of the base stations.

In one embodiment, the method comprises the step of adjusting the user-specific neighbour list based on a change to those of the neighbouring base stations determined to be most likely to be used for handover by the user equipment being served by the serving base station. Accordingly, should the user equipment move, then different base stations may be more likely to be used for handover.

In one embodiment, the step of determining those of the neighbouring base stations most likely to be used for handover by the user equipment occurs in response to base station characteristics provided by the user equipment. Accordingly, the user equipment may provide measurements to enable the probability of handover occurring to be re-evaluated.

In one embodiment, the step of determining those of the neighbouring base stations most likely to be used for handover by the user equipment occurs in response to base station characteristics provided by measurement reports from the user equipment. It will be appreciated that measurement reports are a particularly convenient mechanism to provide this information.

In one embodiment, the step of determining those of the neighbouring base stations most likely to be used for handover by the user equipment occurs in response cumulative handover information indicating those of the neighbouring base stations which are likely to be used in a successful handover by user equipment being served by the serving base station. Accordingly, cumulative or longer term handover information may be provided which may indicate a likelihood or probability, assessed over a period of time, of a successful handover occurring to particular neighbouring cell. That is to say, information is provided with indicates a probability, for each neighbouring cell, of an actual handover occurring, based on historic information of actual handovers. Those cells which have a high probability of handover may be included even if the information provided by any measurement reports may indicate that they are unlikely to be used for handover.

In one embodiment, the method comprises the step of excluding those of the neighbouring base stations indicated by the cumulative handover information to be neighbouring base stations which are unlikely to be used in a successful handover by user equipment being served by the serving base station. Accordingly, cumulative or longer term handover information may be provided which may indicate a likelihood or probability, assessed over a period of time, of an unsuccessful handover occurring to particular neighbouring cell. That is to say, information is provided with indicates a probability, for each neighbouring cell, of an actual handover occurring, based on historic information of actual handovers. Those cells which have a low probability of handover may be excluded even if the information provided by any measurement reports may indicate that they are likely to be used for handover.

In one embodiment, the step of determining those of the neighbouring base stations most likely to be used for handover by the user equipment comprises instructing the user equipment to provide measurement reports for the base stations. Hence, the network may instruct the user equipment to perform the measurements when required.

In one embodiment, the step of instructing comprises instructing the user equipment to provide measurement reports for subsets of the neighbouring base stations. Accordingly, the network may select those of the neighbouring base stations which it is anticipated may be more likely to be used for handover based on information available to the network.

In one embodiment, the step of instructing comprises instructing the user equipment to provide measurement reports for a subset of the neighbouring base stations determined based on measurement reports provided for a previous subset of the neighbouring base stations. Accordingly, previous measurement reports may be used to inform which subset base stations should be measured. For example, it may be more beneficial to instruct measurement reports for neighbours of a cell determined by a previous measurement report to have the highest quality pilot.

In one embodiment, the step of instructing comprises instructing the user equipment to provide measurement reports for a subset of the neighbouring base stations determined based on measurement reports provided by the previous subset of the neighbouring base stations and neighbour relationship information.

In one embodiment, the step of determining those of the neighbouring base stations most likely to be used for handover by a user equipment being served by the serving base station occurs periodically. Hence, the measurements may be made at predetermined intervals to ensure that the neighbour list remains current.

In one embodiment, the step of determining those of the neighbouring base stations most likely to be used for handover by a user equipment being served by the serving base station occurs when characteristics of at least one of those of the neighbouring base stations fails to achieve a threshold amount. Hence, the neighbour list may be re-evaluated when characteristics of a base station in the list falls below a threshold below which it is judged that the base station is unlikely to be used for handover.

In one embodiment, the step of determining those of the neighbouring base stations most likely to be used for handover by a user equipment being served by the serving base station retains those of the neighbouring base stations whose characteristics exceed a threshold amount. Hence, those base stations in whose characteristics are judged to be such that the base station is likely to continue to be used for handover are kept on the neighbour list.

In one embodiment, the cell identifier comprises one of a physical cell identifier and a primary scrambling code.

According to a second aspect, there is provided a base station, comprising: establishing logic operable to establish a first set of cell identifiers reserved for use by small cell base stations and a second set of cell identifiers used by neighbouring base stations of said serving base station; determining logic operable to determine those of said neighbouring base stations most likely to be used for handover by a user equipment being served by said serving base station; and transmission logic operable to transmit a user-specific neighbour list to said user equipment, said user-specific neighbour list having an indication of cell identifiers used by neighbouring base stations, said user-specific neighbour list including all of said first set of cell identifiers and fewer than said second set of cell identifiers, said fewer than said second set of cell identifiers including at least a cell identifier from said second set of cell identifiers associated with that neighbouring base station determined to be most likely used for handover by said user equipment; and wherein said small cell base stations are configured to provide radio coverage having a limited range that provides a smaller coverage than the radio coverage of the serving and neighbouring base stations.

The user-specific neighbour list includes a cell identifier from the second set of cell identifiers associated with that neighbouring base station determined to be most likely used for handover by the user equipment.

In one embodiment, the user-specific neighbour list includes a plurality of cell identifiers from the second set of cell identifiers associated with those neighbouring base stations determined to be most likely used for handover by the user equipment. In one embodiment, the user-specific neighbour list excludes a cell identifier from the second set of cell identifiers associated with that neighbouring base station determined to be most least likely used for handover by the user equipment.

In one embodiment, the user-specific neighbour list excludes a plurality of cell identifiers from the second set of cell identifiers associated with those neighbouring base stations determined to be least likely used for handover by the user equipment.

In one embodiment, the determining logic is operable to determine a maximum number of cell identifiers to be included in the user-specific neighbour list and wherein the user-specific neighbour list includes all of the first set of cell identifiers and those of the second set of cell identifiers which together fail to exceed the maximum number.

In one embodiment, the maximum number is determined based on an expected mobility characteristic of the user equipment and coverage characteristics of the base stations.

In one embodiment, the determining logic is operable to adjust the maximum number in response to changes in at least one of the expected mobility characteristic of the user equipment and the coverage characteristics of the base stations.

In one embodiment, the determining logic is operable to adjust the user-specific neighbour list based on a change to those of the neighbouring base stations determined to be most likely to be used for handover by the user equipment being served by the serving base station.

In one embodiment, the determining logic is operable to determine those of the neighbouring base stations most likely to be used for handover by the user equipment in response to base station characteristics provided by the user equipment.

In one embodiment, the determining logic is operable to determine those of the neighbouring base stations most likely to be used for handover by the user equipment in response to base station characteristics provided by measurement reports from the user equipment.

In one embodiment, the determining logic is operable to determine those of the neighbouring base stations most likely to be used for handover by the user equipment occurs in response cumulative handover information indicating those of the neighbouring base stations which are likely to be used in a successful handover by user equipment being served by the serving base station.

In one embodiment, the determining logic is operable to exclude those of the neighbouring base stations indicated by the cumulative handover information to be neighbouring base stations which are unlikely to be used in a successful handover by user equipment being served by the serving base station.

In one embodiment, the determining logic is operable to determine those of the neighbouring base stations most likely to be used for handover by the user equipment by instructing the user equipment to provide measurement reports for the base stations.

In one embodiment, the determining logic is operable to instruct the user equipment to provide measurement reports for subsets of the neighbouring base stations.

In one embodiment, the determining logic is operable to instruct the user equipment to provide measurement reports for a subset of the neighbouring base stations determined based on measurement reports provided by a previous subset of the neighbouring base stations.

In one embodiment, the determining logic is operable to instruct the user equipment to provide measurement reports for a subset of the neighbouring base stations determined based on measurement reports provided by the previous subset of the neighbouring base stations and neighbour relationship information.

In one embodiment, the determining logic is operable to determine those of the neighbouring base stations most likely to be used for handover by a user equipment being served by the serving base station periodically.

In one embodiment, the determining logic is operable to determine those of the neighbouring base stations most likely to be used for handover by a user equipment being served by the serving base station when characteristics of at least one of those of the neighbouring base stations fails to achieve a threshold amount.

In one embodiment, the determining logic is operable to determine those of the neighbouring base stations most likely to be used for handover by a user equipment being served by the serving base station by retaining those of the neighbouring base stations whose characteristics exceed a threshold amount.

In one embodiment, the cell identifier comprises one of a physical cell identifier and a primary scrambling code.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates an example wireless telecommunications network;
Figure 2 is a flow chart illustrating a method according to one embodiment;
Figure 3 shows the fitness function versus the number of small cell base-stations for greedy and optimal scrambling code allocation schemes;
Figure 4 shows the synchronisation time versus the size of the Neighbouring Cell List (NCL);
Figure 5 shows variations of power versus distance from a reference point for a macrocell and a small cell;
Figure 6 illustrates a) Normalised small cells coverage. Conflict-free identity fitness for b) outdoor hot-spot, dm=200m c) indoor hot-spot, dm=200m and d) outdoor hot-spot, dm=500m;
Figure 7 illustrates a confusion-free identity fitness for a) dm=200m and b) dm=500m;
Figure 8 illustrates a required measurement time versus NCL size;
Figure 9 shows an illustrative example, where a small cell base-station is deployed 250m away from the hosting macrocell base-station;
Figure 10 illustrates: a) Scenario layout b) SRCC values for some pairs of neighbouring cells;
Figure 11 illustrates a) Simulation scenario and received pilot signal power (dBm) map corresponding to a deployed 3G network b) corresponding coverage maps;
Figure 12 illustrates the delayed handover rate versus UE's velocity when only macrocells are considered in the simulation scenario (r=o) and the NCL size is set to 3;
Figure 13 illustrates a delayed handover rate versus user's speed for varying NCL size;
Figure 14 shows the overall handover failure rate resulting in call drops in a heterogeneous scenario consisting of both macrocells and small cells; and
Figure 15 illustrates a measurement's complexity versus NCL size.

DESCRIPTION OF THE EMBODIMENTS

Overview

Before discussing the embodiments in any more detail, first an overview will be provided. As mentioned above, having too many entries in a neighbour cell list can result in calls being dropped due to there being insufficient time for the user equipment to monitor for each cell in the neighbour cell list when making its measurement reports to identify possible target base stations to hand over to. This is because having a long list may result in missing some of the cells for measurement. However, having a shorter neighbour cell list may result in potential neighbouring base stations failing to be identified to the user equipment, which again can lead to handover failure and associated dropped calls.

Accordingly, embodiments seek to provide a neighbour cell list which is neither too long nor too short and, in particular, that some of the unrelated cells or cells which are unlikely to be handed over to are removed from the neighbour cell list. In particular, there is a need to remove some of the cells (such as those that have a lower probability of being used for handover or unrelated cells) from the neighbour cell list or monitored list. The unrelated cells are typically those cells which are unlikely to be used for handover in the short term or short period of time.

Because the deployment of small cells is unplanned and because their (pilot) signal levels vary radically with distance, their existence may not be easily anticipated. In contrast, the variation in the signal levels of larger cells is more stable and predictable.

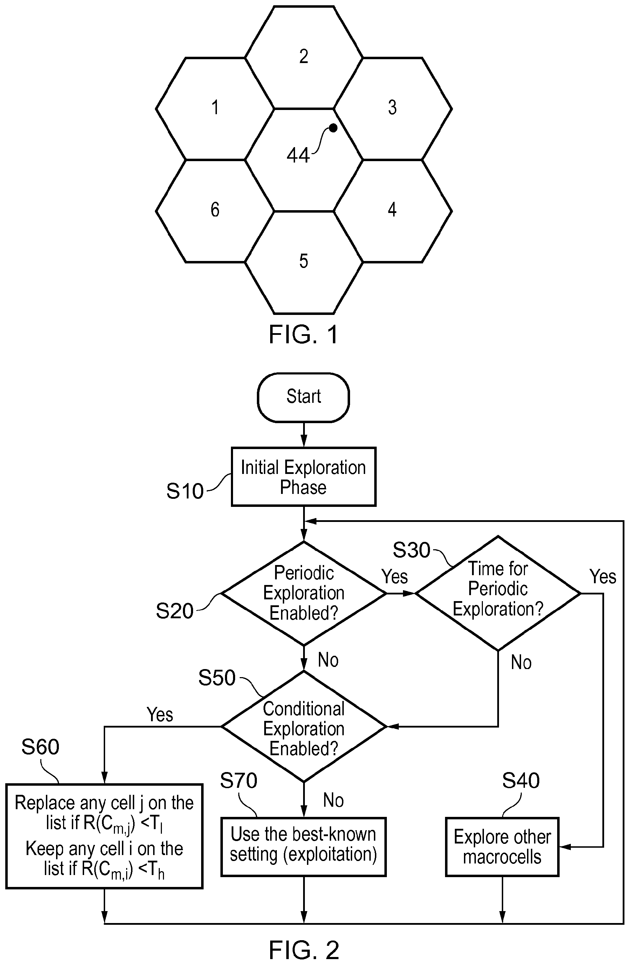

For example, considering a user 44 shown in the example wireless telecommunications network shown in Figure 1, the user is most likely to hand over to cell 2 or 3, but not cell 5 or 6. Therefore, there may be no need to constantly monitor and measure the pilot signal of cell 5 or 6. This can be achieved by customising the neighbour cell list for each user equipment to remove cells 5 and 6. By removing the need to monitor for cells which are unlikely to be handed over to, the probability of identifying a cell that is likely to be handed over to is increased. Although any technique may be utilised to indicate to the user equipment the content of its neighbour cell list, existing messages are available which may be utilised as will now be described in more detail below.

<u>Neighbour Cell Lists</u>

Generally, the list of neighbouring cells is included in the CELL_INFO_LIST and is broadcast to all users of the cell. However, it is additionally possible for the base-station to send "MEASUREMENT CONTROL" messages to the users and include an Information Element (IE) called "Cells for measurement". If the IE "Cells for measurement" has not been included in a MEASUREMENT CONTROL message, all of the cells stored in the variable CELL_INFO_LIST are considered for measurement. Otherwise, the user equipment will consider only those cells that are listed in the "Cells for measurement". The "MEASUREMENT CONTROL" messages are sent periodically from the base station to the user equipment. The frequency of sending MEASUREMENT CONTROL messages is a design parameter than can be tuned. Each MEASUREMENT CONTROL message can include a different "Cells for measurement" information element. Subsequently, the user equipment is expected to report back the measurement quantities of the cells identified in the "Cells for measurement" list. This provides a flexible way for the base station to customise the neighbouring cell list of users.

Consider that a base station requires to limit the size of the monitored neighbour cell list to M cells. M can be a design parameter that allows users to complete all cell measurements in time while avoiding unnecessary measurements. If there are N <M, scrambling codes reserved for small cells, embodiments always include all of those N codes in the IE "Cells for measurement". This is because missing any of the small cells from the list can easily lead to a call drop. The remaining L cells (L=M-N) to be added to the list are determined dynamically for each user to include the cells with the highest handover probability for the current user equipment location, as described in the example below based on user equipment measurements.

<u>Neighbour Cell Lists Content Determination</u>

<u>Stage 1 - Initial Exploration</u>

Considering an example where a macro cell has 10 macro cell neighbours that are represented by 10 distinct scrambling codes {Cm,1, Cm,2 , ... Cm,10} and a set of 8 codes that are reserved for small cells {Cs,1, Cs,2,.... Cs,8}. Assuming that the base station is required to limit the overall size of the monitored list to 10 cells (typically, the number will be higher than this considering all inter-frequency and inter-RAT neighbours) additionally, let R(Cs,i) and R(Cm,j) represent the measurement quality (for example RSCP, SINR, etc.) of the Ith small cell and Jth macro cell respectively. In order to determine the likelihood of a cell being utilised for handover a series of measurements are taken during an initial exploration stage, as shown at step S10 of Figure 2. These measurements measure the quality of the signals from the different base stations. In this example, a series of measurement control messages are transmitted to the user equipment to cause the user equipment to perform these measurements. However, it will be appreciated that other techniques for causing these measurements may be utilised. In particular, to evaluate all neighbouring cells, measurement control messages containing the following cells for measurement list are sent to the user equipment:

MEASUREMENT CONTROL messages #1: Cells for measurement:

{Cs,1, CS,2 ,.... Cs,8, Cm,1, Cm,2}

MEASUREMENT CONTROL messages #2: Cells for measurement:

{Cs,1, Cs,2 ,.... Cs,8 , Cm,3, Cm,4}

MEASUREMENT CONTROL messages #3: Cells for measurement:

{Cs,1 , Cs,2,.... Cs,8 , Cm,5 , Cm,6}

MEASUREMENT CONTROL messages #4: Cells for measurement:

{cos,1 , Cs,2,.... Cs,8 , Cm,7, Cm,8}

MEASUREMENT CONTROL messages #5: Cells for measurement:

{Cs,1, Cs,2,.... Cs,8 , Cm,9 , Cm,10}

In this example, after 5 measurement periods, all neighbouring macro cells have been evaluated. The base stations can the select the 2 macro cells with the highest quality measurement and compile a monitored neighbour cell list which includes all 8 of the small cells and the 2 macro cells. In the example shown in Figure 1, the list would contain macro cells 2 and 3.

During this initial exploration stage, the base station does not have any information about the user's location and, hence, needs to receive the measurements form all neighbouring macro cells. In practice, due to fast fading, channel variations and shadow fading, the decision regarding the choice of neighbouring macro cells that are included in the list may need to be based on more than one measurement report per cell. Also, to establish a level of stability, simple averaging to those measurements may be applied.

Although in the example above, the measurement control messages always include the scrambling codes form the reserved list, it will be appreciated that these may be omitted in order to perform the measurements of the neighbouring macro cells more quickly. However, it will be appreciated that this approach is not without its own drawbacks since this may prevent user equipment temporarily from identifying a small cell to which it may handover. Hence, fewer than all of the reserved scrambling codes may be utilised in order to preserve measurements of some of these whilst an increased number of measurements of macro cells is made. Likewise, although in the example above each macro cell is sequentially assessed, it will be appreciated that this assessment could be optimised such that decisions are made on which macro cell to measure in the subsequent measurement control message based on the relative quality reported in response to a preceding message. For example, in the example shown in Figure 1 the quality of the pilot form macro cell 2 will be stronger than that of macro cell 1 and so, based on knowledge on the relationship between macro cells the inclusion of macro cell 3 in a measurement control message (because it neighbours macro cell 2) may be prioritised.

Stage 2 - Exploitation

Once the monitored neighbour cell list has been finalised in the initial exploration stage, the resulting neighbour cell list is transmitted in a further measurement control message, as shown at step S70 of Figure 2. This measurement control message will include each of the 8 scrambling codes reserved for small cells and the scrambling code associated with the highest quality macro cell, together with the scrambling code for the next highest quality macro cell. In the example shown in Figure 1, this would include the scrambling codes CS1 to CS8 and CM2, CM3.

This stage is referred to as the exploitation stage since the list used by the user equipment includes the neighbours which are believed to have a high chance or probability of handover. However, since the user equipment may move, the closest neighbouring macro cells may also change. For this reason, it is important that the base station additonally explores other neighbouring macro cells.

Stage 3 - Exploration Updates

In order to ensure that the list contains those macro cells which are most likely to be handed over to, the list may be periodically evaluated by exploring whether different macro cells have a higher probability of handover. Such exploration can be realised in two ways namely, periodic exploration and conditional exploration.

Periodic Exploration

In periodic exploration, the base station may regularly include other macro cell neighbours in the measurement control messages. This exploration can be either full or partial. A full exploration is one in that all neighbouring cells are evaluated, this is similar to the initial exploration stage mentioned above. In contrast, a partial exploration is one in which only a set of the macro cell neighbours are measured. In particular, the measurements may be limited to those macro cells which neighbour the existing macro cells having the highest measurement quality.

Accordingly, considering Figure 2, at Step S20, an assessment is made of whether periodic exploration is activated or not. Should period exploration be enabled then an assessment is made at Step S30 of whether a time period between periodic explorations has expired. It will be appreciated that the choice of time period or intervals between subsequent explorations may be set a design parameter. Also, it will be appreciated that this interval may be varied dependant on knowledge of characteristics of the user equipment such as, for example, its rate of mobility. Should it be time for a periodic exploration then this occurs at Step S40 where a process similar to that described with reference to step S10 is repeated.

Conditional exploration

In conditional exploration, the base station replaces any macro cell neighbour included in the measurement control message if its measurement quality for that macro cell falls below a defined threshold $T_L$. In particular, if the signal quality of a neighbouring cell fails to exceed a threshold level, then it can be concluded that the probability of handover to that cell is negligible and, hence, it can be removed from the monitored neighbour list. Once this occurs, the base station can consider other neighbouring cells and perform measurements on those neighbouring cells. Additionally, another threshold level $T_H$ can be defined such that if the measurement quantity of a particular macro cell exceeds that level, the base station can always keep that neighbouring cell on the monitored neighbour list. Moreover, the periodical and conditional explorations may be utilised together.

Accordingly, considering Figure 2, at Step S50 an assessment is made of whether conditional exploration is enabled. Should conditional exploration be enabled the, at Step S60, the monitored neighbour list is updated.

The performance of the exploration stages can be further improved by using information regarding the relative location of the neighbouring cells. This information can be obtained in advance from the user reports during cell operation. For example, considering Figure 1, if a user reports a relatively strong signal from cell 3 it may be reasonable to assume that the received signal power from cell 6 will be weak and so cell 6 should be avoided from being included on the monitored list.

Embodiments enable the support for dense deployment of small cells by providing a solution to efficiently managing the neighbour cell list for users. Too long a neighbour cell list results in delayed handovers and dropped calls when small cells are deployed. Embodiments are entirely compliant with existing standards and are simple to implement making it ideal for small cell base-stations.

Small Cell Networks

Embodiments are particularly suited to determining neighbour cell lists in networks comprising both macro cells and small cells. Further background information relating to such small cell networks will now be provided. Small cell networks, by virtue of their reduced coverage range, low cost and high performance, are a potentially industry-changing disruptive shift in technology for radio access in cellular networks. Their coverage range implies that the spectrum efficiency that can be attained is much greater than that achievable using macrocells alone. In addition, the low costs associated to the small cells means they can be deployed as consumer equipment, effectively reducing the capital load and operating expenses of the host network. Further, owing to the enhanced link budgets due to the close placement of the transmitter and the receiver, improved services and higher data rates can be realised.

However, for these apparent benefits to translate into real advantage for network operator and consumer alike, many considerations in deployment of such cells ought to be taken into the account. This is especially true considering that deployment of small cells is rather organic and ad-hoc without much of advanced planning. Seamless and successful handovers between the small cells and the underlying macro cellular network is considered as a key differentiator for small cells when compared against other competitive data offloading solutions such as those that are based on Wi-Fi technologies.

Construction and management of the neighbouring cell list is considered as a key step towards successful handovers. This is achieved in a relatively simple fashion when a network consisting only of macrocells is considered. In this case, each macrocell base-station chooses a Primarily Scrambling Code (PSC) from a total of 512 available codes. This can be done manually for each base-station or through the help of planning tools. The neighbouring cell list is then constructed for each base-station. The list consists of the PSCs of all neighbouring cells. The neighbouring cell will be then broadcasted to all users of the cell. This will help users to know which cells they need to monitor for potential handovers. However, users can still find any missing cell from the neighbouring cell list (referred to as 'Detected Cells') and report it back to the base-station. However, this procedure is normally very lengthy. Consequently, optimisation of the neighbouring cell list is of great importance. With a too small neighbouring list, users may not be able to trigger the handover procedure and hence suffer from poor service or call drops. On the other hand, with a very lengthy neighbouring cell list, the measurements take long time, and additionally, the user may not be able to complete measurements on all cells and may need to ignore some of the cells subsequently.

The case becomes much more complicated when considering heterogeneous networks consisting of both small and macrocells. Here, because the deployment of small cells are rather ad-hoc and un-planned, it is not possible for the macrocell base-station to add the PSC of each and every small cell base-station within its coverage zone to the list. Therefore, a set of PSCs are reserved for small cells and all macrocell base-stations adds this set to their existing neighbouring cell list. This way, macrocell base-stations can ensure that all users will be capable of detecting the existence of small cell base-stations. Upon detection of a strong pilot signal from one of the small cell base-stations (and assuming that handover criteria are satisfied), the user will be handed over to the small cell. However, since the detected small cells PSC may not be unique, different mechanisms (that are mostly based on assistance from small cell gateway) can be used to identify the target small cell.

The major issue that arises here is the collision of PSCs between the neighbouring cells. Considering a limited number of reserved scrambling codes for small cells and their dense deployments (as expected), it is possible that the two neighbouring cells use identical PSCs. This will result in identity confusion and may lead to dropped calls. To avoid this identity confusion problem, the power of the co-scrambling code signal from any other cell should be at least 20 dB below that of the serving cell. The number of reserved codes for small cells depends on the density of deployment.

Moreover, the scrambling code selection for small cells is normally done by the base-stations and in a decentralised fashion. According to 3GPP standards, to avoid the clash of scrambling codes, each base-station scans all the scrambling codes and select the scrambling code with the smallest detected power. If there is more than one scrambling code with a minimum detected power, the base-station chooses one of them at random. This is in fact equivalent of a local greedy algorithm. Moreover, the choice of the scrambling code is based on the base-station measurement and not the users that are the main victims of potential code collisions.

As an example, consider an area with the size of 100mx100m and deployed varying number of small cells in this area. Consider a small cell base station with the total coverage area of R [m2]. Assume that for that base-station, an area with size of X [m2]

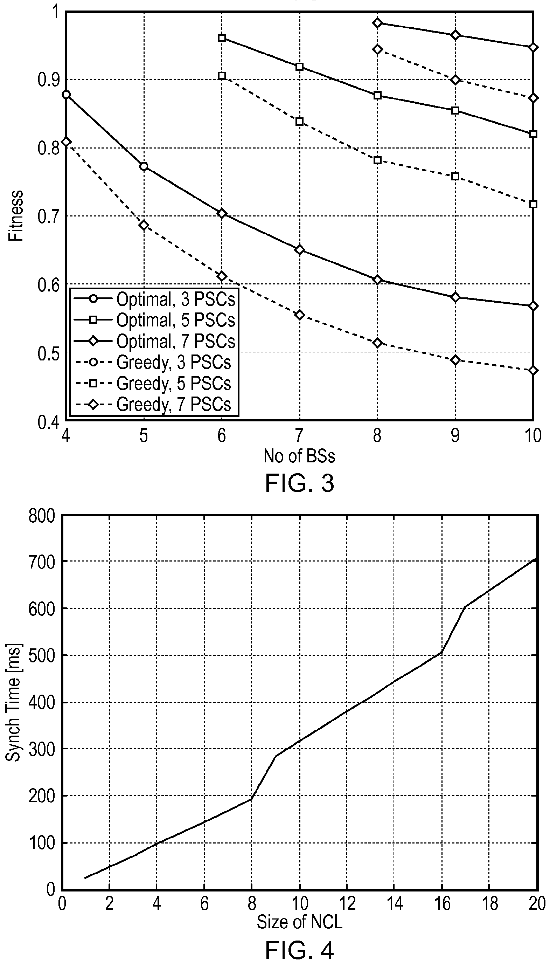

(X≤R) within the coverage area of the base-station is not affected by the co-scrambling code (i.e. the base-station pilot signal is at least 20 dB stronger than any other pilot signal with the same scrambling code). The fitness function can be then defined as the ratio of X to R, (f=X/R). Evidently, fitness equals to 1 refers to the case when the probability of identity confusion for a user within the coverage area of that base-station is zero. With this definition of the fitness function, Figure 3 shows the average fitness of all base-stations versus the number of base-stations. In particular, Figure 3 shows the fitness function versus the number of small cell base-stations for greedy and optimal scrambling code allocation schemes. The results are averaged over 100 independent simulation runs. The fitness values are plotted both for the optimal scrambling code allocation scheme and the local greedy method explained above. As Figure 3 shows, the fitness starts to decrease as the number of base-stations increases. It additionally suggests that in practice at least 7-9 scrambling codes are to be reserved for small cells or otherwise identity confusion may occur.

Now considering the new set of scrambling codes that needs to be added to all macrocells' neighbouring lists, the list will be long and there is a high chance of missing measurements as a result. Figure 4 shows the synchronisation time required for all neighbouring cells measurements as a function of the neighbouring cells size. In particular, Figure 4 shows the synchronisation time versus the size of the Neighbouring Cell List (NCL).

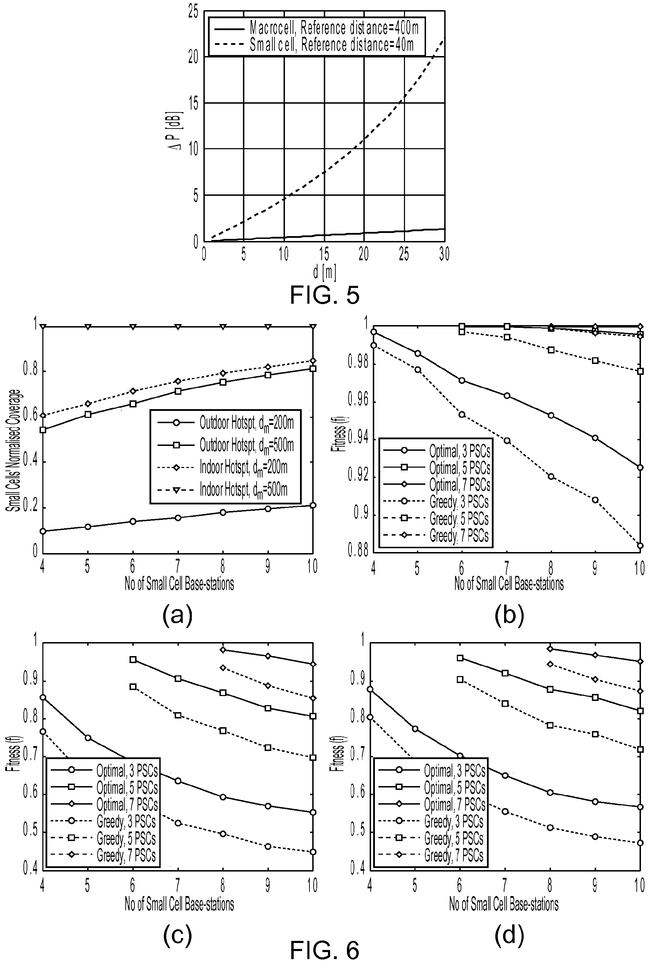

Considering a co-channel operation of small cells and macrocells, with small cells the rate of drop calls as a result of delay in triggering and completing the handover process will be much higher. The reason for this is due to path loss characteristics of small cells that vary radically with the distance to the small cell base-station. Figure 5 shows an example of how the macrocells' and the small cells' power varying with regards to distance. In this example, the user is assumed to be located 400m away from the macrocell base-station and moves towards the base-station. Figure 5 shows how the macro cell's signal strength is increased when the user moves d metres towards the macrocell base-station from the reference point that is 400m from the macrocell base-station. In particular, Figure 5 shows variations of power versus distance from a reference point for a macrocell and a small cell. As expected, the macrocell power starts to increase as the user gets closer to the macrocell. The same results are shown when a small cell base-station is considered. In this case, the reference point is 40m away from the small cell base-station. Compared to the macro cell's case, here the signal level varies more radically with the d. Therefore, if the handover procedure is delayed, there is a higher chance of call drops in small cells as the Signal to Interference Ratio (SIR) falls rapidly.

Hence, it can be seen that for deployment of small cells a number of scrambling codes are to be reserved and each macrocells need to add the list of reserved small cells to its current neighbouring cell list that is broadcast to all users of the cells. To avoid identity confusion and overlap of scrambling codes, around 7-9 scrambling codes ought to be reserved for small cells in dense deployments. Adding this number of codes to the existing neighbour cell list makes the list lengthy and results in long measurement periods and high probability of missing measurements. Additionally, due to the sensitivity of the small cell's path loss to distance from the base-station, the call drops are more common if handovers are delayed.

FURTHER EMBODIMENTS

Further embodiments will now be described which determine neighbour cell lists for use in small cell networks. As mentioned above, long neighbour cell lists caused by introducing and reserving identity codes for small cells in heterogeneous networks can result in sub-optimal network operation. The number of reserved codes needs to be sufficiently high or identity confusions and collisions are inevitable. This results in long neighbouring lists that effectively increases measurement periods and handover failures subsequently. To address the issue, embodiments provide a standard compliant mechanism in that the neighbouring cell list contains only relevant macrocell neighbours and is updated dynamically according to the users' measurements. Simulation scenarios used herein refer to a part of a deployed network and the results confirm performance improvement of embodiments both in terms of handover success rate as well as impact on battery life of the user equipment.

As mentioned above, small cell networks, by virtue of their low cost, reduced coverage and high performance, are a potentially industry-changing disruptive-shift in cellular radio access technology. The low costs associated with small cells imply that they can be deployed as consumer equipment, effectively reducing the capital and operational expenses of operators. The reduced coverage range implies improved attainable spectrum efficiency and spatial reuse when compared to using macrocells alone. This is especially important considering the ever-increasing data traffic demand in today's cellular networks, which requires operators to seek immediate solutions for addressing upcoming capacity deficits through data offloading. Moreover, given the fact that more than 80 percent of data traffic is originated indoors, where the legacy macrocell network is least effective due to high building penetration losses, the coverage and capacity enhancements offered by small cell deployments are a key advantage. Since small cells are considered as an integrated part of the operators' network, seamless handovers between small cells and the underlying macrocell network are also a key benefit when compared against other alternatives solutions such as Wi-Fi. Handover to Wi-Fi requires inter-Radio Access Technology (RAT) handovers using a home agent entity, and the 3rd Group Partnership Project (3GPP) considers Wi-Fi as a non-trusted network. Moreover, a comparison between the deployments of co-channel small cell and Wi-Fi access points (using unlicensed spectrum) reveals that the capacity improvement is more significant in the former case.

However, for these apparent benefits to translate into real advantages for network operators and consumers alike, many considerations in the deployment of co-channel small cells should be considered. This is especially true considering that deployment of small cells is rather organic and ad-hoc without much of advanced planning and that dense small cell deployments are expected in near future.

This is a challenging problem that is associated with the management of Neighbouring Cell Lists (NCLs) in heterogeneous networks as a result of the increased number of neighbouring cells. As confirmed by simulations, if not addressed appropriately, this challenging problem can result in significant performance degradation as well as increased dropped calls. A practical and standard complaint solution for reducing the size of NCLs by customizing the NCLs for individual User Equipment (UE) is provided.

Existing techniques have been mainly focused on self-configuration and self-optimisation of cell-wide NCLs for both legacy macrocells networks and recently for heterogeneous networks, but not in UE customization.

Construction and management of NCLs are considered as key steps for successful handovers. This is achieved in a relatively simple manner when a network comprised of macrocells only is considered. In WCDMA networks, the identity of a macrocell is defined by its Primarily Scrambling Code (PSC), which is selected from a total of 512 PSCs, and the NCL of a cell consists of all PSCs of all its neighbouring cells. The NCL is regularly broadcast to the cell's UEs, and facilitates the handover procedure by restricting the number of cells over which UEs perform measurements (i.e., monitored cells). Whilst it is still possible for UEs to autonomously identify neighbouring cells that are missing from its cell's NCL (i.e., detected cells), this procedure is normally time consuming. As a result, optimisation of cells' NCLs becomes essential, as an incomplete NCL may result in delayed handovers and an overcrowded NCL may lead to lengthy measurement intervals.

The NCL management becomes even more complex when considering heterogeneous networks. Since deployment of small cells are rather ad-hoc and un-planned, it is difficult for a macrocell to keep track of all individual small cells being deployed within its coverage area. Moreover, considering dense small cell deployments, the NCL may become too large if all small cells are included. In order to address this issue, a set of PSCs is usually reserved for small cells and all macrocells include it to their NCLs. In this way, all small cells can always be detectable. Additionally, there exist a number of mechanisms to uniquely identify the target small cell during an inbound handover to that cell.

The major difficulty of this approach is that collision of PSCs among neighbouring cells may occur. Since base-stations usually perform PSC selection in a decentralised manner and considering that only few PSCs are reserved for small cells, it is possible that two adjacent cells use identical PSCs. This will result in cell identity collision and may lead to dropped calls. In order to avoid identity collisions, the pilot signal from the serving cell should be at least 20dB above the pilot signal from any other cell with the same PSC. According to 3GPP standards, in order to avoid PSCs conflicts, small cell base-stations should scan through the reserved small cell PSCs, and select the PSC with the least detected power. If there is more than one PSC below the detection threshold, the base-station randomly chooses one of them. This is a greedy algorithm that follows the problem solving heuristic of making locally optimal choices. One drawback of this scheme is that PSC selection decisions are merely made based on the base-stations' measurements, and UEs' measurements are not accounted. The 3GPP also encourages other vendor specific methods to resolve this issue.

Dense deployments of small cells require that the number of reserved PSCs for small cells is sufficiently large, or identity collision issues will be inevitable. Consider a set of small cell base-stations, $B$, where $|B| = M$. Let $R_i$ denote the set of location points belonging to the coverage area of $i^{th}$ base-station, $b_i \in B$, $S_i$ denote the PSC used by $b_i$ and $PP_{ij}$ represents the pilot power in decibels received from $b_i$ at location point $j$. The identity conflict zone $C_i$ for $i^{th}$ base-station can be defined as:

$$j \in C_i \leftrightarrow \exists k \neq i : S_i = S_k \wedge PP_{i,j} - PP_{k,j} < 20\,dB \qquad (1)$$

The identity conflict zone refers to anywhere within the coverage region of a cell where there exists another cell with the same PSC of the serving cell whose pilot power is less than 20 below the pilot power of the serving cell. Hence, a conflict-free identity fitness, $f$, can be defined as

$$f = 1 - \frac{|C_1 \cup C_2 \ldots \cup C_M|}{|R_1 \cup R_2 \ldots \cup R_M|} \qquad (2)$$

Evidently, fitness $f$ can be envisioned as the area of the identity conflict-free zone normalised against the total coverage area of small cells. Simulations were performed to illustrate the link between the number of PSCs available and fitness $f$ for varying small cell deployment densities. The small cell base-stations are randomly placed in a large hot-spot with the size of 100m $\times$ 100m. The distance between the centre of the hot-spot and the underlying macrocell base-station $d_m$ was varied. Averaging the results from 100 simulations runs, Figure 6-a shows the total area covered by small cells normalised against the total hot-spot area. The remaining Figures illustrate the fitness $f$ associated to different scenarios. Using exhaustive search, the optimal PSC allocation is found and the conflict-free identity fitness associated with this allocation is compared against the local greedy method suggested by the 3GPP.

Figure 6 illustrates: a) Normalised small cells coverage. Conflict-free identity fitness for b) outdoor hot-spot, $d_m$=200m c) indoor hot-spot, $d_m$=200m and d) outdoor hot-spot, $d_m$=500m.

As shown in Figure 6a, the overall small cells coverage is expectedly increasing with the number of deployed base-stations and more importantly with the distance from the underlying macrocell base-station. Moreover, due to the isolation provided by walls, small cells' coverage is notably improved indoors. Figure 6b shows that the strong received macrocell pilot ($d_m$=200m) results in shrinking of the small cells' coverage. Consequently, identity conflict is not significant since each small cell base-station covers only its close vicinity where its pilot signal is strong. The fitness starts to decline with increasing deployment density as PSC collisions become more likely. Additionally, there is a fitness gap between the optimal and the greedy PSC allocation scheme. The fineness is remarkably degraded for indoor deployments (Figure 6c) and when moving away from the macrocell base-station (Figure 6d), where the small cells' coverage is extended and collision probability is larger. Unfortunately, indoors and macro cell's edges are two attractive locations for small cell deployments where a macrocell is least efficient.

In addition to identity collision which results in UEs not being able to decode the channels of the serving base-station, there is an identity confusion issue when a cell has two neighbours with identical PSCs. In this case, the serving cell may not be able to identify the target cell on receiving a measurement report for handover purposes. Let $N_i$ denote the set of neighbouring cells for $b_i$ and $N_i^c$ ($\subset N_i$) represents the neighbouring cells of $b_i$, from which outbound handover may cause identity confusions. In other words,

$$\forall n \in N_i, \ n \in N_i^c \leftrightarrow \exists k \neq n : k \in N_i \wedge S_j = S_k \qquad (3)$$

As a result, a confusion-free identity fitness $f^*$ can be defined as

$$f^* = 1 - \frac{\sum_{i=1}^{M} \sum_{j \in N_i^c} P_{i,j}}{M} \qquad (4)$$

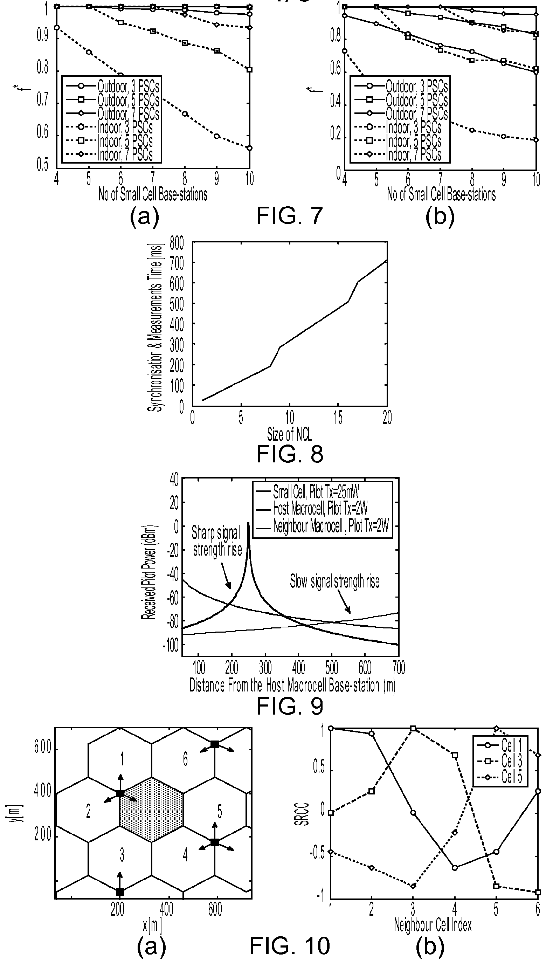

where $P_{i,j}$ refers to the probability of handover from cell i to the neighbour cell $j$. Using the simulation scenario and parameters used in Figure 6, Figure 7 illustrates the relationship between fitness $f^*$ and the density of small cell deployments for a given number of PSCs allocated using the presented 3GPP greedy algorithm.

Figure 7 illustrates a confusion-free identity fitness for a) $d_m$=200m and b) $d_m$=500m

As can be observed, identity confusion is more critical when small cells are deployed at the macrocells' edges. Additionally, increasing the number of PSCs can significantly alleviate the performance and avoid identity confusions. However, if the number of PSCs is too large, UEs will need to frequently scan numerous cells. This has a direct impact on UEs' battery life. Moreover, if the number of PSCs is too large, there is a risk that UEs are not able to complete all measurements on all listed cells on time for handover purposes. Figure 8 shows the estimated time required for a UE to synchronise and perform signal strength measurements over all cells in the NCL in Rayleigh fading channels.

Figure 8 illustrates a required measurement time versus NCL size.

Unlike a scenario consisting macrocells only, with co-channel deployment of macrocells and small cells, delays occurred during inbound handovers to the small cells can results in increased call drops. This is because the strength of the small cell signal rises sharply once the UE hits the small cell's boundary. Figure 9 shows an illustrative example, where a small cell base-station is deployed 250m away from the hosting macrocell base-station. If the inbound handover to the small cell is delayed, e.g., due to long measurement periods, the UE will experience poor downlink SINR as a result of the increased interference from the small cell, and the call will be dropped if the UE is unable to decode control channel signals after a certain time period. The situation is less critical in case of macrocell to macrocell handovers as the rise in the signal strength of the neighbouring macrocells is more gradual. As a result, there is a need for decreasing the size of the NCL in heterogeneous networks to improve the UEs battery life and to reduce delays during inbound handovers.

Most of the mentioned issues related to the NCL management simultaneously apply to LTE networks (so as the proposed solution of this disclosure). However, in LTE, the problem has been alleviated to some extent. For example, in Release 9, global cell identity reporting and proximity indication procedures are introduced to mitigate the issue of identity conflicts and NCL management. Since proximity indication procedures are based on UE signalling, a major issue is the impact of such signalling on the network load as well as implications on the battery life of UEs and delays. Moreover, these mechanisms are not implemented in a large number of existing UEs, and thus alternative solutions are needed.

Figure 9 shows an illustrative example of received pilot power in a heterogeneous network consisting of small cells.

User Equipment-Specific Neighbour Cell List

The NCL of a cell contains the list of all cells that its UEs can potentially handover to. This includes macrocell neighbours that are far from some of the UEs. Embodiments provide a standard compliant method to customise the NCL for each UE such that the UE specific NCL contains only relevant cells, i.e., cells to which the UE can potentially handover to in a short time window. Since deployment of small cells are ad-hoc and their signal level rise sharply in the vicinity of their coverage area, leading to increased risk of call drops in case of handover delays, it is suggested that the NCL contains all PSCs reserved for small cells at all times. Generally, the list of neighbouring cells is included in the *Cell_info_list* and is broadcasted to all UEs of the cell. However, it is additionally possible for the base-station to frequently send *Measurement Control Messages* (MCM) to UEs and include an Information Element (IE) referred to as *Cells for measurement.* If the IE *Cells for measurement* has not been included in a MCM, all of the cells stored in the variable *Cell_info_list* shall be considered for measurement. Otherwise, the UE only reports measurements for those cells that are listed in the *Cells for measurement.* This provides a flexible way for base-station to customise the NCL for specific UEs. The number of macrocell neighbours $k$ to be included in the NCL is defined based on the number of reserved PSCs for small cells $r$ and the desired length of the NCL $l$ (i.e. $k=l-r$). The challenge is to identify the most relevant k neighbouring macrocells for each UE in a dynamic manner. The relevancy of a neighbouring macrocell is related to the probability of the UE handing over to that cell in a short time window.

In practice, due to the asymmetrical geometry of the cells as well as the UEs' moving path, the probability of the UE handover to neighbouring cells can vary significantly from a neighbouring cell to another. Such handover probabilities can be effectively derived from long-term handover statistics. Subsequently, for each UE, the relevancy of a neighbouring cell can be defined based on the combination of the long-term handover probability to such neighbouring cell and more importantly the UE's measurement reports. In order to remove the impact of channel variations from instantaneous UEs' measurement reports, an exponentially weighted moving average filter can be applied. That is to say

$$R_i \leftarrow R_i^{old} + \alpha(R_i^{new} - R_i^{old}) \tag{5}$$

where $R_i$ is the measured pilot power for $i^{th}$ macrocell neighbour and $\alpha$ is a learning rate. Higher $\alpha$ values discount old observations faster. The relevancy of the $i^{th}$ neighbouring cell, $RS_i$, can thus be defined as

$$RS_i = R_i \times P_i^* \tag{6}$$

where $P_i^*$ is the long term probability of handover to the $i^{th}$ neighbouring macrocell. Selection of the neighbouring macrocells involves *exploitation* as well as *exploration* stages. During exploitation, a cell relies on its current estimate of the neighbouring cells' relevancy and chooses $k$ neighbours with the highest relevancy. However, due to the UEs' movement, channel variations, shadowing effects and measurement inaccuracies, other neighbours may be examined from time to time so as to avoid delayed handovers and potential call drops. This can be achieved via exploration stage, in which some new neighbouring cells are evaluated. Whilst it is possible to select new neighbouring candidates for exploration uniformly at random, it would be advantageous if the correlation between the neighbouring cells is additionally considered. For example, if the received pilot signals from one neighbouring cell is too weak, neighbouring cells adjacent to that cell could thus be discarded.

In order to quantify the relationship between the received pilot power from the neighbouring cells, Spearman's rank correlation coefficient (SRCC) is used. SRCC is a non-parametric measure of statistical dependence between two variables ranging from -1 to 1, with 1 indicating full agreement between two variables. Figure 10b shows the SRCC values calculated between the pilot powers received at the central cell received at the central cell (highlighted in Figure 10a) from cell 1, cell 3 and cell 5 and all other neighbouring cells in the simple hexagonal macrocell layout shown in Figure 10a.

Figure 10 illustrates: a) Scenario layout b) SRCC values for some pairs of neighbouring cells.

Figure 10b confirms that there are strong correlations (both positive and negative) between the received pilot powers from neighbouring cells, making the use of SRCC beneficial when constructing the NCL. For example, there is a strong dependence between the received pilot power from neighbouring cell 1 and 2 (SRCC=0.93) as the two cells belong to the same base-station (See Figure 10a) and the antenna gain is the only differentiator. Additionally, Figure 10 confirms strong negative correlation between neighbouring cell 1 and 4, which is evident from the layout. Based on the UEs measurement reports, each cell can easily construct the SRCC value between neighbour pairs. Then, during each exploration phase, the base-station replace $n$ $(n<k)$ neighbouring macrocells with new neighbours and sends an updated MCM to the UE. The n neighbours that are removed from the list are those with the lowest relevancy. Furthermore, new neighbours are selected from a probability distribution that is constructed based on the correlation of the remaining neighbouring cells to those with the highest relevancy. If $E$ represents the set of existing neighbouring cells excluding the $n$ neighbours recently removed from the NCL (i.e. $|E| = k-n$), and $W$ represents the set of neighbours that were not initially included in the NCL, the probability of choosing neighbouring cell $i$ $(i \in W)$ during the exploration stage $q_i$ is defined as:

$$\forall i \in W, \ q_i = \frac{\sum_{\forall j \in E}(SR_{i,j}+1) \times RS_j}{\sum_{\forall l \in W}\sum_{\forall j \in E}(SR_{l,j}+1) \times RS_j} \tag{7}$$

where $SR_{i,j}$ is the SRCC corresponding to the received pilot power from neighbouring cells $i$ and $j$. Each exploration stage consists of a number of measurement reports such that the impact of channel variations and shadow fading are compensated. In addition to the periodic explorations that are regularly performed after a certain number of exploitation episodes, explorations can be additionally triggered asynchronously once some triggering criteria is fulfilled. This can be, for example, the case when the received pilot power from a given neighbouring cell on the existing NCL falls below a certain threshold implying handovers to that cell to be unlikely.

As a result of selectively choosing the neighbouring cells, measurements reports associated to different neighbours might appear in varying time-intervals. For example, a particular neighbouring cell might not be evaluated for a consecutive number of measurement periods. In that case, upon performing a new measurement, the relevancy of such cell needs to be quickly updated and old observations to be discounted faster. This can be achieved by modulating the learning rate $\alpha$ ($0 \leq \alpha_{min} \leq \alpha \leq \alpha_{max} \leq 1$) against the time from the previous measurement $T_p$.

$$\alpha = \alpha_{min} + (\alpha_{max} - \alpha_{min})\max\left(1, \frac{T_p}{T_{max}}\right) \tag{8}$$

where $T_{max}$ is the maximum time interval in that consecutive cell measurements are considered to be correlated.

Performance Evaluation

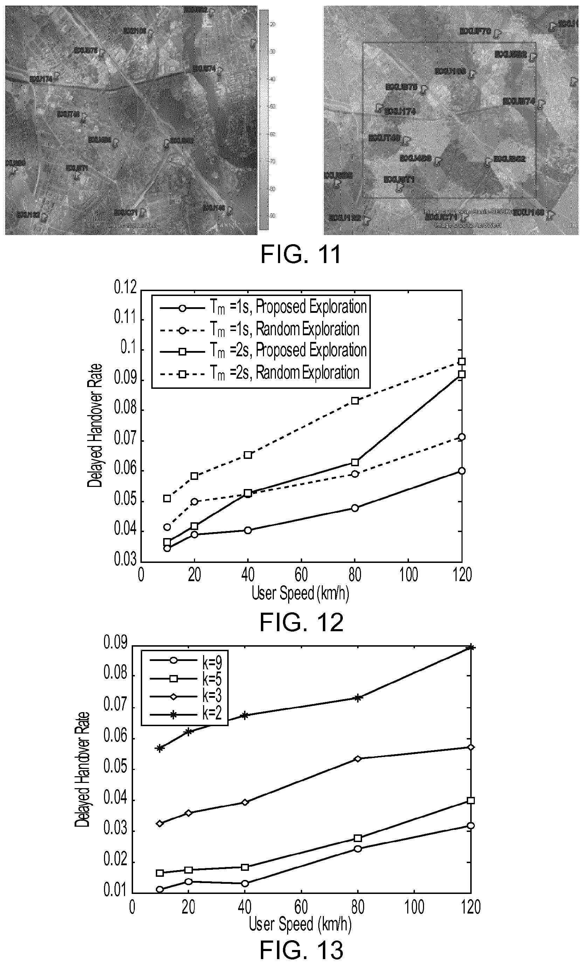

Simulations were performed to evaluate the performance of the proposed NCL management mechanism according to embodiments. Since the layout of the macrocell base-stations impact the construction of the NCLs (as well as the probability of handovers to the neighbouring cells), a realistic deployment scenario is considered. The 3G network deployed is used here for the performance measurement. Figure 11a illustrates the location of the base-stations and the corresponding received pilot power map, while Figure 11b illustrates the coverage maps of the base-stations. In order to remove the edge effects, key measurement results were collected merely from the central part of the simulation scenario. Key simulation parameters were taken from 3GPP recommendations, and fast fading channel variations were modelled according to 3GPP urban channel model.

During the simulations $\alpha_{min}$ and $\alpha_{max}$ are considered to be 0.1 and 0.9 and $T_{max}$ was set 4s. A successful and dynamic construction of the NCL requires that all relevant cells are included in the list whilst the size of the list is kept minimal. Delayed handovers can be defined as events where a UE does not have a particular neighbouring cell within its NCL when a handover to that neighbour should be initiated (i.e., when the neighbouring cell becomes offset better than the serving cell).

Figure 11 illustrates a) Simulation scenario and received pilot signal power (dBm) map corresponding to a deployed 3G network b) corresponding coverage maps.

Figure 12 illustrates the delayed handover rate versus UE's velocity when only macrocells are considered in the simulation scenario ($r$=o) and the NCL size is set to 3. The results are shown for different time intervals ($T_m$) at which MCMs are transmitted to the UE. Expectedly, the delayed handover rate is higher when UEs' NCL is updated less frequently. Additionally, compared to the random explorations that are used in most multi-armed bandit problems, embodiments utilising the exploration scheme are shown to perform better. Higher UEs' velocity implies faster variations of the channels as well as less correlated measurements that makes it more difficult to keep the NCL updated. However, the results are generally promising since the delayed handover rates are rather low despite of the very small NCL size ($k$=3) and infrequent transmission of MCM messages.

Figure 12 illustrates a delayed handover rate versus user's speed for different exploration strategies and for different values of $T_m$.

Figure 13 compares delayed handover rates for varying sizes of NCL when $T_m$=1s. Reducing the NCL size $k$ from 9 cells to 5 cells has marginal impact on the overall performance as the proposed algorithm can manage to dynamically keep relevant neighbours on the NCL. The results also suggest that the number of macrocell neighbours in the NCL should be at least 3, as reducing the size from 3 to 2 results in significant performance degradation.

Figure 13 illustrates a delayed handover rate versus user's speed for varying NCL size.

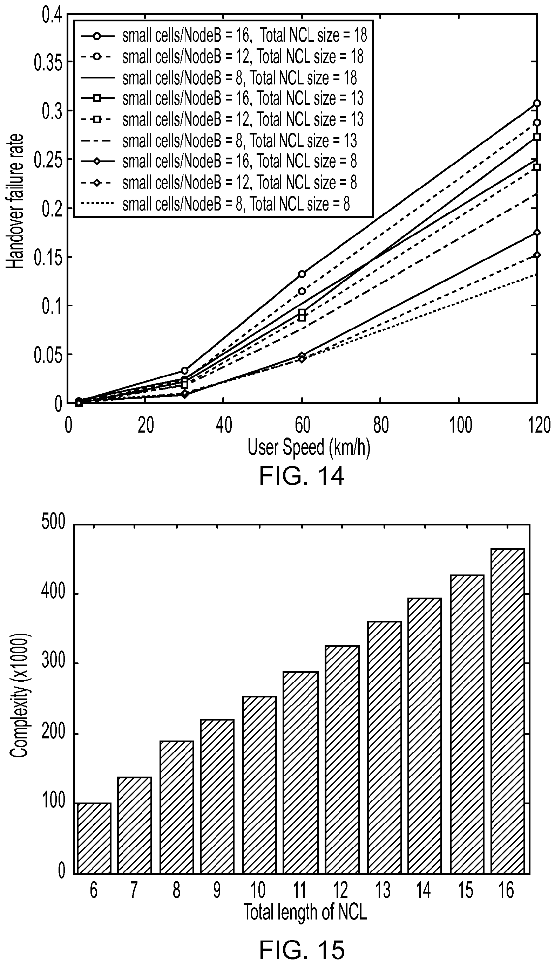

Figure 14 shows the overall handover failure rate resulting in call drops in a heterogeneous scenario consisting of both macrocells and small cells. Distribution of small cells is considered to be uniform within the coverage area of macrocells, where 5 PSCs are reserved for small cells. The measurement delay is modelled. In principle, Figure 14 shows that smaller NCL results in improved calls' drop rate since the measurement period is reduced. Increasing the density of small cells deployment results in increased dropped calls. Finally, using a similar model, Figure 15 shows the overall complexity of the cells measurements (expressed as total number of multiplications and additions and memory access) as function of the size of the NCL. This shows that reducing the size of NCL would not only improve the performance in terms of reduced dropped calls but additionally results in longer battery life for UEs.

Figure 14 illustrates handover failure rate versus user's speed for different NCL size and small cell deployment densities.

Figure 15 illustrates a measurement's complexity versus NCL size.

As mentioned above, increased NCL sizes as a result of introducing and reserving PSCs for small cell basestations in heterogeneous networks causes sub-optimal performance. The number of PSCs reserved for small cells should be sufficiently large or otherwise identity confusions and collisions will be inevitable. In order to address the issue of large NCLs, embodiments provide a standard compliant method in which a base-station dynamically constructs specific UE NCLs such that only relevant neighbouring macrocells are included and measurements delay is consequently improved. Embodiments consist of two phases namely exploitation and exploration stages. Simulations of a part of a 3G network confirm performance improvements in terms of reduced dropped calls and extended battery life of UEs when the dynamic UE-specific NCL solution of embodiments is used.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1. A method performed by a serving base station comprising:

   establishing a first set of cell identifiers reserved for use by neighbouring small cell base stations;
   establishing a second set of cell identifiers used by neighbouring base stations (1, 2, 3, 4, 5, 6) of said serving base station;
   determining those of said neighbouring base stations most likely to be used for handover by a user equipment (44) being served by said serving base station; and
   transmitting a user-specific neighbour list to said user equipment, said user-specific neighbour list having an indication of cell identifiers used by neighbouring base stations, said user-specific neighbour list including all of said first set of cell identifiers and fewer than said second set of cell identifiers, said fewer than said second set of cell identifiers including at least a cell identifier from said second set of cell identifiers associated with that neighbouring base station (1, 2, 3, 4, 5, 6) determined to be most likely used for handover by said user equipment; wherein
   said small cell base stations are configured to provide radio coverage having a limited range that provides a smaller coverage than the radio coverage of the serving and neighbouring base stations.

2. The method of any preceding claim, wherein said small cell base stations comprise a plurality of small cell base stations selected from at least one of micro cell base stations, pico cell base stations and femto cell base stations.

3. The method of claim 1 or 2, comprising the step of determining a maximum number of cell identifiers to be included in said user-specific neighbour list and wherein said user-specific neighbour list includes all of said first set of cell identifiers and those of said second set of cell identifiers which together fail to exceed said maximum number.

4. The method of any preceding claim, comprising the step of adjusting said user-specific neighbour list based on a change to those of said neighbouring base stations determined to be most likely to be used for handover by said user equipment being served by said serving base station.

5. The method of any preceding claim, wherein said step of determining those of said neighbouring base stations most likely to be used for handover by said user equipment occurs in response to base station characteristics provided by said user equipment.

6. The method of any preceding claim, wherein said step of determining those of said neighbouring base stations most likely to be used for handover by said user equipment occurs in response to base station characteristics provided by measurement reports from said user equipment.

7. The method of any preceding claim, wherein said step of determining those of said neighbouring base stations most likely to be used for handover by said user equipment occurs in response cumulative handover information indicating those of said neighbouring base stations which are likely to be used in a successful handover by user equipment being served by said serving base station.

8. The method of claim 7, comprising the step of excluding those of said neighbouring base stations indicated by said cumulative handover information to be neighbouring base stations which are unlikely to be used in a successful handover by user equipment being served by said serving base station.

9.  The method of any preceding claim, wherein said step of determining those of said neighbouring base stations most likely to be used for handover by said user equipment comprises instructing said user equipment to provide measurement reports for said base stations.

10.  The method of claim 9, wherein said step of instructing comprises instructing said user equipment to provide measurement reports for subsets of said neighbouring base stations.

11.  The method of claim 9 or 10, wherein said step of instructing comprises instructing said user equipment to provide measurement reports for a subset of said neighbouring base stations determined based on measurement reports provided by said previous subset of said neighbouring base stations and neighbour relationship information.

12.  The method of any preceding claim, wherein said step of determining those of said neighbouring base stations most likely to be used for handover by a user equipment being served by said serving base station occurs when characteristics of at least one of those of said neighbouring base stations fails to achieve a threshold amount.

13.  The method of any preceding claim, wherein said step of determining those of said neighbouring base stations most likely to be used for handover by a user equipment being served by said serving base station retains those of said neighbouring base stations whose characteristics exceed a threshold amount.

14.  A base station, comprising:

establishing logic operable to establish a first set of cell identifiers reserved for use by neighbouring small cell base stations and a second set of cell identifiers used by neighbouring base stations of said serving base station; determining logic operable to determine those of said neighbouring base stations most likely to be used for handover by a user equipment being served by said serving base station; and transmission logic operable to transmit a user-specific neighbour list to said user equipment, said user-specific neighbour list having an indication of cell identifiers used by neighbouring base stations, said user-specific neighbour list including all of said first set of cell identifiers and fewer than said second set of cell identifiers, said fewer than said second set of cell identifiers including at least a cell identifier from said second set of cell identifiers associated with that neighbouring base station (1, 2, 3, 4, 5, 6) determined to be most likely used for handover by said user equipment; and wherein said small cell base stations are configured to provide radio coverage having a limited range that provides a smaller coverage than the radio coverage of the serving and neighbouring base stations.

15.  A computer program product operable, when executed on a computer, to perform the method steps of any one of claims 1 to 13.

**Patentansprüche**

1.  Von einer bedienenden Basisstation ausgeführtes Verfahren, umfassend:

das Einrichten eines ersten Satzes von Zellkennungen, die für die Nutzung durch benachbarte kleinzellige Basisstationen reserviert sind; das Einrichten eines zweiten Satzes von Zellkennungen, die von benachbarten Basisstationen (1, 2, 3, 4, 5, 6) der besagten, bedienenden Basisstation benutzt werden; das Bestimmen von denjenigen der besagten, benachbarten Basisstationen, für die es am wahrscheinlichsten ist, dass sie für die Übergabe von einem Benutzerendgerät (44) benutzt werden, das von der besagen, bedienenden Basisstation bedient wird; und das Übermitteln einer benutzerspezifischen Nachbarschaftsliste an besagtes Benutzerendgerät, wobei die besagte, benutzerspezifische Nachbarschaftsliste eine Indikation von Zellkennungen umfasst, die von benachbarten Basisstationen verwendet werden, wobei die besagte, benutzerspezifische Nachbarschaftsliste alle Zellkennungen aus besagtem erstem Satz von Zellkennungen und weniger Zellkennungen als in besagtem zweitem Satz von Zellkennungen enthalten umfasst, wobei die wenigeren Zellkennungen als die im zweiten Satz von Zellkennungen enthaltenen Zellkennungen mindestens eine Zellkennung aus besagtem zweitem Satz von Zellkennungen umfassen, welche mit der besagten, benachbarten Basisstation (1, 2, 3, 4, 5, 6) assoziiert ist, für die bestimmt wurde, dass es für sie am wahrscheinlichsten ist, dass sie für die Übergabe von besagtem Benutzerendgerät benutzt wird; wobei

die besagten, kleinzelligen Basisstationen konfiguriert sind für das Bereitstellen von Funkabdeckung mit limitierter Reichweite, die eine geringere Abdeckung bereitstellt als die Funkabdeckung der bedienenden Basisstation und der benachbarten Basisstation.

2. Das Verfahren nach einem jeglichen der vorgenannten Ansprüche, wobei besagte kleinzellige Basisstationen eine Vielzahl von kleinzelligen Basisstationen umfassen, die ausgewählt wurden unter mindestens einer Mikrozellen-Basisstation, einer Pikozellen-Basisstation und einer Femtozellen-Basisstation.

3. Das Verfahren nach Anspruch 1 oder 2, den Schritt des Bestimmens einer maximalen Anzahl von Zellkennungen umfassend, die in die besagte, benutzerspezifische Nachbarschaftsliste aufzunehmen sind, und wobei die besagte, benutzerspezifische Nachbarschaftsliste alle Zellkennungen aus besagtem erstem Satz von Zellkennungen und diejenigen aus dem besagten zweiten Satz von Zellkennungen umfasst, die zusammen nicht die besagte, maximale Anzahl überschreiten.

4. Das Verfahren nach einem jeglichen der vorgenannten Ansprüche, den Schritt des Anpassens der besagten, benutzerspezifischen Nachbarschaftsliste auf der Grundlage einer Änderung an denjenigen der besagten angrenzenden Basisstationen umfassend, für die bestimmt wurde, dass es für sie am wahrscheinlichsten ist, dass sie für die Übergabe von besagtem, von besagter Basisstation bedientem Benutzerendgerät benutzt werden.

5. Das Verfahren nach einem jeglichen der vorgenannten Ansprüche, wobei der besagte Schritt des Bestimmens derjenigen benachbarten Basisstationen, für die es am wahrscheinlichsten ist, dass sie für die Übergabe von besagtem Benutzerendgerät benutzt werden, in Reaktion auf Basisstationstransceiver erfolgt, die von dem besagten Benutzergerät zur Verfügung gestellt werden.

6. Das Verfahren nach einem jeglichen der vorgenannten Ansprüche, wobei der besagte Schritt des Bestimmens derjenigen benachbarten Basisstationen, für die es am wahrscheinlichsten ist, dass sie für die Übergabe von besagtem Benutzerendgerät benutzt werden, in Reaktion auf Basisstationstransceiver erfolgt, die von Messberichten besagten Benutzergeräts zur Verfügung gestellt werden.

7. Das Verfahren nach einem jeglichen der vorgenannten Ansprüche, wobei der besagte Schritt des Bestimmens derjenigen benachbarten Basisstationen, für die es am wahrscheinlichsten ist, dass sie für die Übergabe von besagtem Benutzerendgerät benutzt werden, in Reaktion auf kumulative Übergabeinformationen erfolgt, welche diejenigen der besagten benachbarten Basisstationen indizieren, für die es wahrscheinlich ist, dass sie für eine erfolgreiche Übergabe von besagtem, von besagter bedienender Basisstation bedientem Benutzerendgerät benutzt werden.

8. Das Verfahren nach Anspruch 7, den Schritt des Ausschließens derjenigen benachbarten Basisstationen umfassend, von denen die besagten, kumulativen Übergabeinformationen indizieren, dass es sich bei ihnen um benachbarte Basisstationen handelt, für die es unwahrscheinlich ist, dass sie für eine erfolgreiche Übergabe von besagtem, von besagter bedienender Basisstation bedientem Benutzerendgerät benutzt werden.

9. Das Verfahren nach einem jeglichen der vorgenannten Ansprüche, wobei der besagte Schritt des Bestimmens derjenigen benachbarten Basisstationen, für die es am wahrscheinlichsten ist, dass sie für die Übergabe von besagtem Benutzerendgerät benutzt werden, umfasst, besagtes Benutzergerät anzuweisen, Messberichte für besagte Basisstationen zur Verfügung zu stellen.

10. Das Verfahren nach Anspruch 9, wobei besagter Schritt des Anweisens umfasst, besagtes Benutzergerät anzuweisen, Messberichte für Teilsätze der besagten, benachbarten Basisstationen zur Verfügung zu stellen.

11. Das Verfahren nach Anspruch 9 oder 10, wobei der besagte Schritt des Anweisens umfasst, besagtes Benutzergerät anzuweisen, Messberichte für einen Teilsatz der besagten, benachbarten Basisstationen zur Verfügung zu stellen, die auf der Grundlage von Messberichten bestimmt wurden, die von dem besagten, vorhergehenden Teilsatz benachbarter Basisstationen zur Verfügung gestellt wurden, und auf der Grundlage von Nachbarbeziehungsinformationen.

12. Das Verfahren nach einem jeglichen der vorgenannten Ansprüche, wobei der Schritt des Bestimmens von denjenigen der benachbarten Basisstationen, für die es am wahrscheinlichsten ist, dass sie für die Übergabe von einem Benutzergerät benutzt werden, das von der besagten, bedienenden Basisstation bedient wird, dann erfolgt, wenn Charakteristiken von mindestens einer dieser besagten, benachbarten Basisstationen einen Grenzwert nicht erreichen.

13. Das Verfahren nach einem jeglichen der vorgenannten Ansprüche, wobei der Schritt des Bestimmens von denjenigen der benachbarten Basisstationen, für die es am wahrscheinlichsten ist, dass sie für die Übergabe von einem Benutzergerät benutzt werden, das von der besagten, bedienenden Basisstation bedient wird, diejenigen der besagten, benachbarten Basisstationen zurückhält, die einen Grenzwert überschreiten.

14. Eine Basisstation, umfassend:

Einrichtungslogik, ausgelegt für das Einrichten eines ersten Satzes von Zellkennungen, die für die Benutzung durch benachbarte, kleinzellige Basisstationen reserviert sind, und eines zweiten Satzes von Zellkennungen, die von benachbarten Basisstationen der besagten, bedienenden Basisstation benutzt werden;
Bestimmungslogik, ausgelegt für das Bestimmen von denjenigen der besagten, benachbarten Basisstationen, für die es am wahrscheinlichsten ist, dass sie für die Übergabe von einem Benutzerendgerät benutzt werden, das von der besagen, bedienenden Basisstation bedient wird; und
Übermittlungslogik, ausgelegt für das Übermitteln einer benutzerspezifischen Nachbarschaftsliste an besagtes Benutzerendgerät, wobei die besagte, benutzerspezifische Nachbarschaftsliste eine Indikation von Zellkennungen umfasst, die von benachbarten Basisstationen verwendet werden, wobei die besagte, benutzerspezifische Nachbarschaftsliste alle Zellkennungen aus besagtem erstem Satz von Zellkennungen und weniger Zellkennungen als in besagtem zweitem Satz von Zellkennungen enthalten umfasst, wobei die besagten wenigeren Zellkennungen als die im besagten zweiten Satz von Zellkennungen enthaltenen Zellkennungen mindestens eine Zellkennung aus besagtem zweitem Satz von Zellkennungen umfassen, welche mit der besagten, benachbarten Basisstation (1, 2, 3, 4, 5, 6) assoziiert ist, für die bestimmt wurde, dass es für sie am wahrscheinlichsten ist, dass sie für die Übergabe von besagtem Benutzerendgerät benutzt wird; und wobei die besagten, kleinzelligen Basisstationen konfiguriert sind für das Bereitstellen von Funkabdeckung mit limitierter Reichweite, die eine geringere Abdeckung bereitstellt als die Funkabdeckung der bedienenden Basisstation und der benachbarten Basisstation.

15. Computerprogramm-Produkt, dafür ausgelegt, um bei dessen Ausführung auf einem Computer die Verfahrensschritte gemäß einem beliebigen der Ansprüche 1 bis 13 durchzuführen.

**Revendications**

1. Procédé effectué par une station de base de desserte, comprenant les étapes suivantes :

établir un premier ensemble d'identificateurs de cellule réservé à l'utilisation par des stations de base de petite cellule voisines ;
établir un deuxième ensemble d'identificateurs de cellule utilisé par des stations de base voisines (1, 2, 3, 4, 5, 6) de ladite station de base de desserte ;
déterminer celles, parmi lesdites stations de base voisines, qui sont les plus susceptibles d'être utilisées pour un transfert par un équipement d'utilisateur (44) qui est desservi par ladite station de base de desserte ; et
transmettre une liste de voisins spécifique à l'utilisateur audit équipement d'utilisateur, ladite liste de voisins spécifique à l'utilisateur ayant une indication d'identificateurs de cellule utilisés par des stations de base voisines, ladite liste de voisins spécifique à l'utilisateur incluant la totalité dudit premier ensemble d'identificateurs de cellule et moins dudit deuxième ensemble d'identificateurs de cellule, ledit moins dudit deuxième ensemble d'identificateurs de cellule incluant au moins un identificateur de cellule dudit deuxième ensemble d'identificateurs de cellule associé à cette station de base voisine (1, 2, 3, 4, 5, 6) déterminée comme étant la susceptible d'être utilisée pour un transfert par ledit équipement d'utilisateur ; où
lesdites stations de base de petite cellule sont configurées pour fournir une couverture radio ayant une portée limitée qui fournit une couverture plus petite que la couverture radio des stations de base de desserte et voisines.

2. Procédé selon l'une quelconque des revendications précédentes, dans lequel lesdites stations de base de petite cellule comprennent une pluralité de stations de base de petite cellule sélectionnées parmi au moins une de stations de base de microcellule, stations de base de picocellule et stations de base de femtocellule.

**3.** Procédé selon la revendication 1 ou 2, comprenant l'étape de détermination d'un nombre maximum d'identificateurs de cellule à inclure dans ladite liste de voisins spécifique à l'utilisateur et dans lequel ladite liste de voisins spécifique à l'utilisateur inclut la totalité dudit premier ensemble d'identificateurs de cellule et ceux dudit deuxième ensemble d'identificateurs de cellule qui ensemble ne parviennent pas à dépasser ledit nombre maximum.

**4.** Procédé selon l'une quelconque des revendications précédentes, comprenant l'étape d'ajustement de ladite liste de voisins spécifique à l'utilisateur sur la base d'un changement de celles, parmi lesdites stations de base voisines, qui sont déterminées comme étant les plus susceptibles d'être utilisées pour un transfert par ledit équipement d'utilisateur qui est desservi par ladite station de base de desserte.

**5.** Procédé selon l'une quelconque des revendications précédentes, dans lequel ladite étape de détermination de celles, parmi lesdites stations de base voisines, qui sont les plus susceptibles d'être utilisées pour un transfert par ledit équipement d'utilisateur se produit en réponse à des caractéristiques de station de base fournies par ledit équipement d'utilisateur.

**6.** Procédé selon l'une quelconque des revendications précédentes, dans lequel ladite étape de détermination de celles, parmi lesdites stations de base voisines, qui sont les plus susceptibles d'être utilisées pour un transfert par ledit équipement d'utilisateur se produit en réponse à des caractéristiques de station de base fournies par des rapports de mesure en provenance dudit équipement d'utilisateur.

**7.** Procédé selon l'une quelconque des revendications précédentes, dans lequel ladite étape de détermination de celles, parmi lesdites stations de base voisines, qui sont les plus susceptibles d'être utilisées pour un transfert par ledit équipement d'utilisateur se produit en réponse à des informations de transfert cumulées indiquant celles, parmi lesdites stations de base voisines, qui sont susceptibles d'être utilisées dans un transfert réussi par un équipement d'utilisateur qui est desservi par ladite station de base de desserte.

**8.** Procédé selon la revendication 7, comprenant l'étape d'exclusion de celles, parmi lesdites stations de base voisines, qui sont indiquées par lesdites informations de transfert cumulées comme étant des stations de base voisines qui sont peu susceptibles d'être utilisées dans un transfert réussi par un équipement d'utilisateur qui est desservi par ladite station de base de desserte.

**9.** Procédé selon l'une quelconque des revendications précédentes, dans lequel ladite étape de détermination de celles, parmi lesdites stations de base voisines, qui sont les plus susceptibles d'être utilisées pour un transfert par ledit équipement d'utilisateur comprend le fait de donner pour instruction audit équipement d'utilisateur de fournir des rapports de mesure pour lesdites stations de base.

**10.** Procédé selon la revendication 9, dans lequel ladite étape d'instruction comprend le fait de donner pour instruction audit équipement d'utilisateur de fournir des rapports de mesure pour des sous-ensembles desdites stations de base voisines.

**11.** Procédé selon la revendication 9 ou 10, dans lequel ladite étape d'instruction comprend le fait de donner pour instruction audit équipement d'utilisateur de fournir des rapports de mesure pour un sous-ensemble desdites stations de base voisines déterminé sur la base de rapports de mesure fournis par ledit sous-ensemble précédent desdites stations de base voisines et d'informations de relation de voisin.

**12.** Procédé selon l'une quelconque des revendications précédentes, dans lequel ladite étape de détermination de celles, parmi lesdites stations de base voisines, qui sont les plus susceptibles d'être utilisées pour un transfert par un équipement d'utilisateur qui est desservi par ladite station de base de desserte se produit lorsque des caractéristiques d'au moins une de celles, parmi lesdites stations de base voisines, qui sont les plus susceptibles d'être utilisées pour un transfert par un équipement d'utilisateur qui est desservi par ladite station de base de desserte ne parviennent pas à atteindre une quantité seuil.

**13.** Procédé selon l'une quelconque des revendications précédentes, dans lequel ladite étape de détermination de celles, parmi lesdites stations de base voisines, qui sont les plus susceptibles d'être utilisées pour un transfert par un équipement d'utilisateur qui est desservi par ladite station de base de desserte conserve celles, parmi lesdites stations de base voisines, qui sont les plus susceptibles d'être utilisées pour un transfert par un équipement d'utilisateur qui est desservi par ladite station de base de desserte dont les caractéristiques dépassent une quantité seuil.

**14.** Station de base, comprenant :

une logique d'établissement exploitable pour établir un premier ensemble d'identificateurs de cellule réservé à l'utilisation par des stations de base de petite cellule voisines et un deuxième ensemble d'identificateurs de cellule utilisé par des stations de base voisines de ladite station de base de desserte ;

une logique de détermination exploitable pour déterminer celles, parmi lesdites stations de base voisines, qui sont les plus susceptibles d'être utilisées pour un transfert par un équipement d'utilisateur qui est desservi par ladite station de base de desserte ; et

une logique de transmission exploitable pour transmettre une liste de voisins spécifique à l'utilisateur audit équipement d'utilisateur, ladite liste de voisins spécifique à l'utilisateur ayant une indication d'identificateurs de cellule utilisés par des stations de base voisines, ladite liste de voisins spécifique à l'utilisateur incluant la totalité dudit premier ensemble d'identificateurs de cellule et moins dudit deuxième ensemble d'identificateurs de cellule, ledit moins dudit deuxième ensemble d'identificateurs de cellule incluant au moins un identificateur de cellule dudit deuxième ensemble d'identificateurs de cellule associé à cette station de base voisine (1, 2, 3, 4, 5, 6) déterminée comme étant la susceptible d'être utilisée pour un transfert par ledit équipement d'utilisateur ; et où lesdites stations de base de petite cellule sont configurées pour fournir une couverture radio ayant une portée limitée qui fournit une couverture plus petite que la couverture radio des stations de base de desserte et voisines.

**15.** Produit de programme informatique exploitable, lorsqu'il est exécuté sur un ordinateur, pour effectuer les étapes de procédé de l'une quelconque des revendications 1 à 13.

FIG. 1

FIG. 2

FIG. 3

FIG. 4

FIG. 5

(a)

(b)

(c)

(d)

FIG. 6

FIG. 7

(a)　　　　　　　(b)

FIG. 8

FIG. 9

(a)　　　FIG. 10　　　(b)

FIG. 11

FIG. 12

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110237252 A

- WO 2011022731 A